# EUROPÄISCHE PATENTSCHRIFT

(11) **EP 3 278 663 B1**
(45) Veröffentlichungstag und Bekanntmachung des Hinweises auf die Patenterteilung: **27.02.2019**
(21) Anmeldenummer: 17401083.5
(22) Anmeldetag: 01.08.2017
(51) Int. Cl.: A01M 7/00

(54) **GESTÄNGE EINES LANDWIRTSCHAFTLICHEN GERÄTS**
BOOM OF AN AGRICULTURAL DEVICE
RAMPE D'UN ENGIN AGRICOLE

(30) Priorität: 04.08.2016 DE 102016114422
(43) Veröffentlichungstag der Anmeldung: 07.02.2018
(73) Patentinhaber: Amazonen-Werke H. Dreyer GmbH & Co. KG, 49205 Hasbergen (DE)
(72) Erfinder: Kowollik, Daniel, 47443 Moers (DE)

(56) Entgegenhaltungen:
- EP-A1- 0 604 681
- EP-A2- 1 525 784
- WO-A1-2012/087893
- WO-A1-2013/092272
- GB-A- 2 100 962
- US-A1- 2006 255 175

## Beschreibung

Die Erfindung betrifft ein Gestänge gemäß Oberbegriff des Patentanspruchs 1.

Das aus EP 2989875 A1 bekannte Gestänge, z.B. einer Feldspritze, ist herkömmlich gestaltet, d.h., die Abschnitte sind in Arbeitsrichtung gesehen sehr schmal gebaut, um Gewicht einzusparen. Die in Fahrtrichtung schmale Bauweise der Abschnitte ist auch im Hinblick auf eine minimale Transportbreite des Gestänges in der zusammengefalteten Gestänge-Transportstellung wichtig, die beispielsweise etwa 3 m nicht überschreiten soll. Jeder Abschnitt weist einen Untergurt auf, an dem Verteilereinrichtungen angebracht sein können, und einen oder zwei Obergurte sowie die Gurte verbindende Diagonal- und/oder Querstreben. In der Gestänge-Arbeitsstellung fluchten die Untergurte bzw. die Verteilereinrichtungen quer zur Arbeitsrichtung der das Gestänge führenden Feldspritze, wobei sie etwa bodenparallel verlaufen. Hingegen nimmt die Höhe des Gestänges in Richtung vom mittleren Gestängeteil nach außen allmählich ab. Da solche Gestänge beispielsweise eine Arbeitsbreite von etwa 40 m bestreichen, resultiert aus der Fahrbewegung in Arbeitsrichtung, aus Bodenunebenheiten, Windeinflüssen und dergleichen eine Tendenz zum Schwingen in Arbeitsrichtung, in der die Abschnitte aufgrund der schmalen Bauweise und die Gelenkbereiche mangelnde Stabilität haben. Beispielsweise beim Ausbringen von Pflanzenschutzmitteln oder dergleichen resultieren aus Schwingungen des Gestänges in Arbeitsrichtung, insbesondere der äußersten Abschnitte, lokale Über- und/oder Unterdosierungen, die es zu vermeiden gilt.

Weiterer Stand zum Technik ist zu finden in EP 2510784 A1 und EP 1201123 A2.

Der Erfindung liegt die Aufgabe zugrunde, ein Gestänge der eingangs genannten Art zu schaffen, mit dem trotz großer Arbeitsbreite die Transportbreite einhaltbar ist und Schwingungen in Arbeitsrichtung in der Gestänge-Arbeitsstellung minimiert oder vermieden werden, um das Ausbringergebnis zu optimieren.

Die gestellte Aufgabe wird mit den Merkmalen des Patentanspruchs 1 gelöst.

Durch den in etwa bodenparallelen Querschenkel wird jeder Abschnitt in einer bodenparallelen Ebene so ausgesteift, dass in der Gestänge-Arbeitsstellung Schwingungen etwa parallel zum Boden vermieden oder weitestgehend minimiert werden. Dadurch lassen sich auf baulich einfache Weise lokale Über- und/oder Unterdosierungen des ausgebrachten Mittels vermeiden und wird die Ausbringqualität optimiert. Indem die aussteifenden Querschenkel von einem Abschnitt zum anderen abwechselnd gegenüber einer Hochseite vorspringen und auf unterschiedlichen Höhenniveaus angeordnet sind, lassen sie sich bei der Umstellung in die Gestänge-Transportstellung innerhalb der Transportbreite ineinanderschachteln, so dass die Transportbreite problemlos eingehalten wird. Zweckmäßig sind die Querschenkel in Leichtbauweise ausgebildet, um Gewicht einzusparen.

Um in der Gestänge-Arbeitsstellung in den außenliegenden Endbereichen möglichst wenig Masse zu haben, ist es zweckmäßig. wenn bis auf den bezüglich des mittleren Gestängeteils äußersten Abschnitt nur weiter innenliegende Abschnitte je einen Querschenkel aufweisen, vorzugsweise bei vier Abschnitten pro Seite die inneren drei Abschnitte oder die innersten zwei Abschnitte.

Um bei möglichst geringerem Gewicht optimale Steifigkeit in der Ebene parallel zum Boden zu erzielen ist es zweckmäßig, wenn der Querschenkel als flächiger Fachwerkrahmen ausgebildet ist, vorzugsweise mit zwei annähernd zum Abschnitt parallelen, beabstandeten und durchgehenden Außenprofilen und diese verbindenden Diagonal- und/oder Querstreben.

Um trotz Leichtbauweise optimale Gestaltfestigkeit zu erzielen, ist es zweckmäßig, wenn die Außenprofile U-Profile oder L-Profile oder anders geartete Profile sind, und die Diagonal- und/oder Querstreben gelochte Blechkantteile. Hier können beispielsweise Leichtmetall, Leichtmetalllegierungen oder faserverstärkte Kunststoffe zum Einsatz kommen.

Um einerseits ein optimales Biegesteifigkeitsprofil zu erzielen und andererseits in der Gestänge-Transportstellung Platz zu sparen, nimmt im Fachwerkrahmen der Abstand zwischen den Außenprofilen in der Gestänge-Arbeitsstellung in Richtung nach außen graduell ab, vorzugsweise zumindest über einen Teil der Abschnittslänge.

In einer zweckmäßigen Ausführungsform liegen die Unterseiten der Abschnitte auf gleichem Höhenniveau, liegen hingegen die Oberseiten der Abschnitte auf stufenweise abnehmenden Höhenniveaus, und sind die die Querschenkel bildenden Fachwerkrahmen auf den Oberseiten der Abschnitte angebracht. Dabei kann der Querschenkel eine Art Obergurt des gitterträgerartigen Abschnitts bilden, der somit aus Gewichtsgründen keinen eigenen Obergurt benötigt.

In einer zweckmäßigen Ausführungsform verläuft ein Außenprofil des Fachwerkrahmens auf der Oberseite des Abschnitts im Wesentlichen entlang der Oberseitenkante, die der Seite des Abschnitts abgewandt ist, gegenüber der der Schenkel vorspringt. Durch diese Platzierung des Fachwerkrahmens wird für den Abschnitt bei zur Versteifung gerade genug weit vorspringendem Querschenkel optimale Steifigkeit in Arbeitsrichtung erzielt.

Um ein optimales Biegesteifigkeitsprofil des innersten Abschnitts einerseits und Stauraum in der Gestänge-Transportstellung freizumachen, kann es zweckmäßig sein, wenn ein innerer Endabschnitt des einen Außenprofils, mit welchem der Querschenkel vorspringt, in Richtung zum Gelenk schräg abgeknickt ist.

Um in der Arbeitsstellung mit zunehmendem Abstand vom mittleren Gestängeteil möglichst wenig zusätzliche Masse zu erzielen, ist es zweckmäßig, wenn der Schenkel jedes in Bezug auf den mittleren Gestängeteil äußeren Abschnitts weniger weit vorspringt als der Schenkel des nächst inneren Abschnitts, vorzugsweise derart, dass in der Gestänge-Transportstellung sämtliche Schenkel innerhalb einer durch sämtliche zusammengefalteten Abschnitte definierten Transportbreite verbleiben. Dies soll nicht ausschließen, bei zusammengefalteten Abschnitten die Transportbreite durch die ineinandergeschachtelten Schenkel zu definieren.

Herstellungstechnisch günstig können die Schenkel auf den Abschnitten mehrfach verschraubt, vernietet, verschweißt oder verklebt sein.

Um auch die Gelenkbereiche effizient in der Arbeitsstellung des Gestänges auszusteifen, kann dort am Abschnitt eine den Gelenkbereich überbrückende, z.B. vom Stellelement beim Auffalten verstellbare, sich dann am anderen Abschnitt abstützende Querstrebe vorgesehen werden.

Anhand der Zeichnungen werden Ausführungsformen des Erfindungsgegenstandes erläutert. Es zeigen:
- Fig. 1: eine Schemadraufsicht auf ein mit einem Gestänge ausgestattetes landwirtschaftliches Gerät, in Gestänge-Arbeitsstellung,
- Fig. 2: eine Hälfte des Gestänges von Fig. 1, in vergrößertem Maßstab,
- Fig. 3: die in Fig. 2 gezeigte Hälfte des Gestänges beim Zusammenfalten zur Gestänge-Transportstellung, in weiter vergrößertem Maßstab,
- Fig. 4: eine Schemadarstellung der Hälfte des Gestänges zur Verdeutlichung von Gestänge-Gelenken, in der Arbeitsstellung,
- Fig. 5: eine Schemadarstellung der in der Transportstellung zusammengefalteten Abschnitte der Hälfte des Gestänges von Fig. 2, in einer Ansicht in Abschnittslängsrichtung, und
- Fig. 6: eine Perspektivansicht der Hälfte des Gestänges bei der Überführung in die Transportstellung und vor Erreichen der Transportstellung.

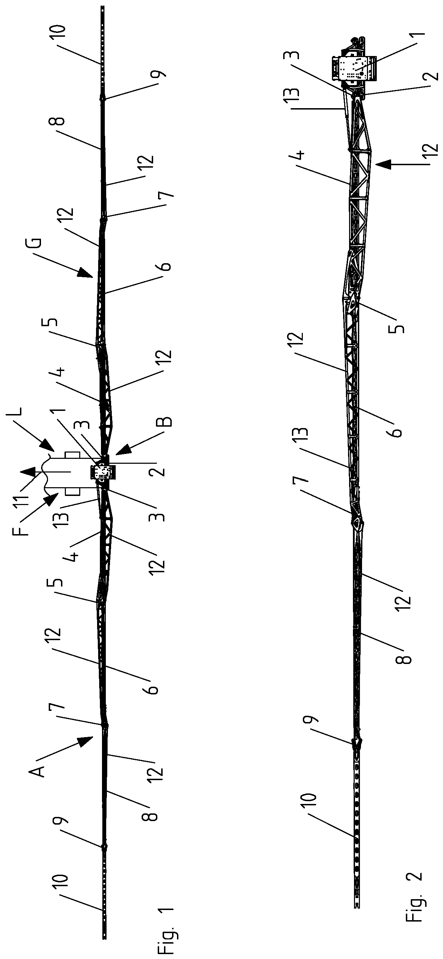

Fig. 1 zeigt eine Schemadraufsicht eines landwirtschaftlichen Geräts L, beispielsweise einer Feldspritze F zum Ausbringen von Pflanzenschutzmitteln, Pestiziden, Dünger oder dergleichen auf großer Arbeitsbreite bis beispielsweise 40 m oder mehr, wobei das Gerät L in Arbeitsrichtung 11 fährt, geschoben oder gezogen wird. An einer Halterung 1 des Geräts L ist ein in Fig. 1 in der Gestänge-Arbeitsstellung gezeigtes Gestänge G montiert, hier beispielsweise ein Verteilergestänge der Feldspritze F mit nicht dargestellten Verteilereinrichtungen. An der Halterung 1 ist ein relativ kurzer mittlerer Gestängeteil 2 stationär montiert, an dessen beiden Seiten über annähernd bodensenkrechte Gelenke 3 innerste Abschnitte 4 durch Stellelemente 13, z.B. doppelt wirkende Hydraulikzylinder, Pneumatikzylinder oder elektromotorisch betätigte Spindeleinrichtungen schwenkbar angelenkt sind. Über ein Gelenk 5 schließt sich jeweils ein weiterer Abschnitt 6 an, auf den über ein weiteres Gelenk 7 ein weiterer Abschnitt 8 folgt, der an einem äußersten Gelenk 9 einen äußersten Abschnitt 10 trägt. In der gezeigten Gestänge-Arbeitsstellung A fluchten die aufgefalteten Abschnitte 2, 4, 6, 8, 10 in etwa quer zur Arbeitsrichtung 11, wobei die Unterseiten der Abschnitte in etwa bodenparallel sind, hingegen die Oberseiten nach außen stufenweise oder schräg absinken.

Zur Aussteifung der Abschnitte 4, 6, und zweckmäßig auch 8, gegen Verbiegen und gegen Schwingungen in einer Ebene parallel zum Boden B sind an diesen annähernd bodenparallele Querschenkel 12 oberseitig momentaufnehmend so angeordnet, dass diese z.B. abwechselnd gegenüber einer Hochseite jedes Abschnitts vorspringen und die Abschnitte aussteifen.

In der geringfügig vergrößerten Darstellung in Fig. 2 ist zusätzlich ein weiteres Stellelement 13 zwischen den Abschnitten 6 und 8 bei dem Gelenk 7 angedeutet, z.B. zum Auffalten und Zusammenfalten und zum Halten der aufgefalteten Arbeitsstellung A.

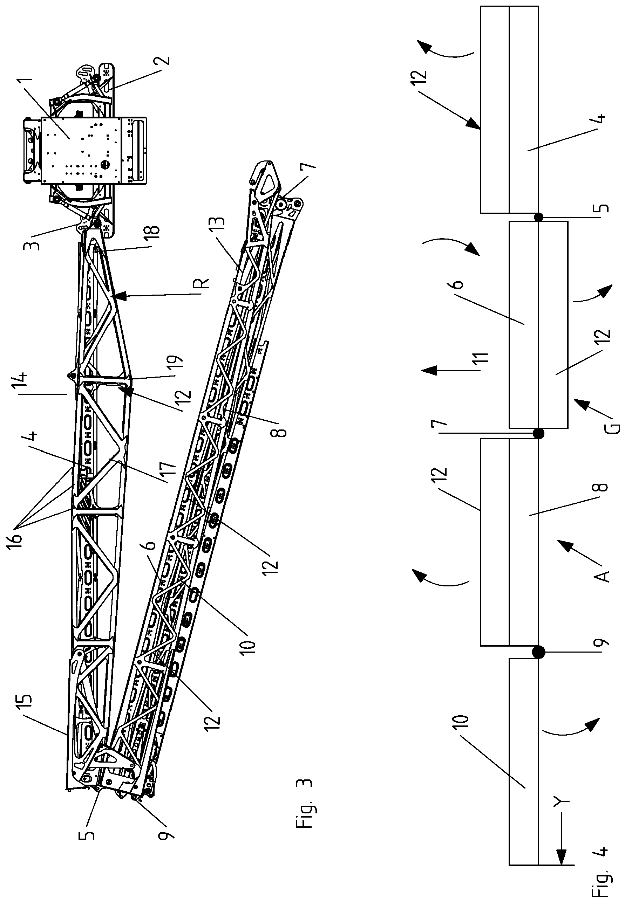

Wie ferner aus den Fig. 2 und Fig. 3 entnehmbar ist, sind die Querschenkel 12 jeweils als flächige Fachwerkrahmen R, vorzugsweise in Leichtbauweise, ausgebildet. Jeder Fachwerkrahmen R weist beispielsweise zwei annähernd zum Abschnitt 4, 6, 8 parallele beabstandete Außenprofile 14, 17 und diese verbindende Diagonal- und/oder Querstreben 16 auf. Im Bereich des Gelenks 5 zwischen den Abschnitten 4 und 6 ist eine z.B. durch das Stellelement 13 aus einer Stauposition in eine Aussteifposition ausschwenkbare Schwenkstrebe 15 angedeutet, die in der Gestänge-Arbeitsstellung A der Aussteifung im Gelenkbereich dient und sich dann am Querschenkel 12 des anderen Abschnitts abstützt.

Am Abschnitt 4 ist z.B. das vorspringend positionierte Außenprofil 17 ab einem Bereich 19, an welchem der Querschenkel 12 am breitesten ist, in einem Endabschnitt 18 in Richtung zum Gelenk 3 hin schräg abgeknickt. Von dem Bereich 19 ausgehend in Richtung zum Gelenk 5 nähern sich die Außenprofile 14, 17 graduell an. Eine ähnliche Bauweise weisen auch die Querschenkel 12 der Abschnitte 6 und 8 auf, wobei der Querschenkel 12 am Abschnitt 4 am weitesten vorspringt, die Querschenkel 12 an den Abschnitten 6, 8 hingegen jeweils etwas weniger weit. Der äußerste Abschnitt 10 ist in der gezeigten Ausführungsform ohne vorspringenden Querschenkel 12 belassen, könnte jedoch in gleicher Weise ausgesteift sein.

Fig. 4 verdeutlicht schematisch die Bauweise der Hälfte des Gestänges G in einer Draufsicht, und in der Gestänge-Arbeitsstellung A, in der die maximale Arbeitsbreite X bestrichen wird. Hier ist zu erkennen, wie die Querschenkel 12 an den Abschnitten 4, 6, 8 jeweils abwechselnd gegenüber einer Hochseite vorspringen, und dass die Gelenke 5, 7, 9 in Arbeitsrichtung 11 abwechselnd zueinander quer zur Längsrichtung des jeweiligen Abschnitts versetzt sind, um die Abschnitte möglichst platzsparend in die Gestänge-Transportstellung zusammenfalten und weitestgehend parallel zueinander aneinander setzen zu können (durch Pfeile angedeutet).

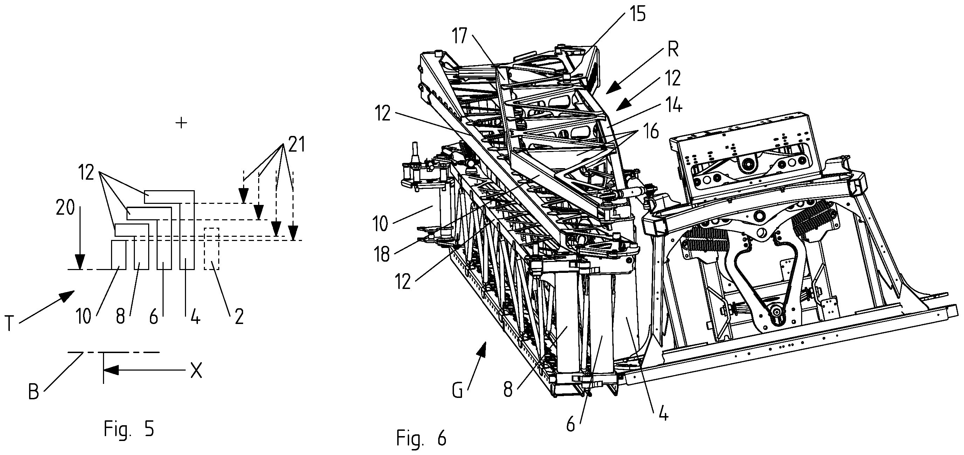

Fig. 5 gehört zu Fig. 4 und verdeutlicht die Gestänge-Transportstellung T, in welcher die Abschnitte 4-10 zur Gänze zusammengefaltet sind, um eine Transportbreite X einzuhalten, die zur Hälfte hier durch die Außenseite bzw. Hochseite des äußersten Abschnitts 10 definiert ist. Der Querschenkel 12 des Abschnitts 8 springt soweit vor, dass er in der Gestänge-Transportstellung T in Fig. 5 innerhalb der Transportbreite X liegt. Alternativ könnten die Querschenkel 12 der Abschnitte weiter vorspringen als gezeigt und somit die Transportbreite X definieren, z.B. bei sehr schmalen Abschnitten.

Fig. 5 verdeutlicht auch, dass die Unterseiten sämtlicher Abschnitte und gegebenenfalls auch des mittleren Gestängeteils 2 auf einem gemeinsamen Höhenniveau 20 und annähernd parallel zum Boden B liegen, hingegen die Oberseiten stufenweise auf unterschiedlichen Höhenniveaus 21 liegen, wie auch die Querschenkel 12, damit die Querschenkel 12 wie gezeigt in der Gestänge-Transportstellung ineinanderverschachtelt sind und die Transportbreite X eingehalten wird. Statt die Oberseiten gestuft auf die unterschiedlichen Höhenniveaus 21 zu setzen, könnten alternativ die Oberseiten nach außen im Wesentlichen gleichzeitig schräg abfallen.

Fig. 6 zeigt in einer Perspektivdetailansicht die eine Hälfte des Gestänges G kurz vor Erreichen der endgültigen Transportstellung, wobei der Querschenkel 12 des Abschnitts 4 bereits über den Querschenkel 12 des Abschnitts 6 und der Querschenkel 12 des Abschnitts 6 bereits über den Querschenkel 12 des Abschnitts 8 greift. Der äußerste Abschnitt 10 ist in Fig. 6 der Einfachheit halber wegelassen, wird aber in der Gestänge-Transportstellung an die Hochseite des Abschnitts 8 gefaltet.

Fig. 6 verdeutlicht schließlich, dass die Außenprofile 14, 17 beispielsweise des Querschenkels 12 im Fachwerkrahmen R U-Profile sind, während die Diagonal- und/oder Querstreben 16 dünnwandige und gelochte oder teilweise gelochte Profile sein können. Der Querschenkel 12 ist beispielsweise auf der Oberseite des Abschnitts 4 mehrfach verschraubt, vernietet, verschweißt oder verklebt. Anhand des Abschnitts 8 ist zu erkennen, dass dieser nach Art eines hochkant stehenden Gitterträgers mit einer Art Obergurt bzw. Obergurt-Abschnitten, einem Untergurt und mehreren Diagonalstreben relativ schmal ausgebildet ist. Am Untergurt können nicht hervorgehobene Verteilereinrichtungen angebracht sein. Alternativ bildet der Querschenkel 12 den Obergurt des Abschnitts.

## Patentansprüche

1. Gestänge (G) eines landwirtschaftlichen Geräts (L), insbesondere Verteilergestänge einer Feldspritze (F), mit mehreren, über annähernd bodensenkrechte Gelenke (3, 5, 7, 9) schwenkbar verbundenen, jeweils nach Art hochkant stehender Gitterträger ausgebildeten, an beiden Seiten eines mittleren Gestängeteils (2) angebrachten Abschnitten (4, 6, 8, 9), die mittels Stellelementen (13) zwischen einer nach außen aufgefalteten Gestänge-Arbeitsstellung (A), in der die Abschnitte in etwa quer zur Arbeitsrichtung (11) und annähernd bodenparallel fluchten, und einer zick-zack-förmig zusammengefalteten, in etwa in Arbeitsrichtung (11) orientierten Gestänge-Transportstellung (T) mit parallel aneinander platzierten Abschnitten verstellbar sind, **dadurch gekennzeichnet, dass** ausgehend vom mittleren Gestängeteil (2) mindestens zwei über das jeweilige Gelenk (5, 7) aufeinanderfolgende Abschnitte (4, 6, 8) jeweils durch wenigstens einen etwa bodenparallelen Querschenkel (12) versteift sind, der gegenüber einer Gestängehochseite des Abschnitts vorspringt, und dass in der Gestänge-Arbeitsstellung (A) die Querschenkel (12) der beiden Abschnitte (4, 6; 6, 8) in Bezug auf das Gelenk (5; 7) gegenüber den voneinander abgewandten Hochseiten der beiden Abschnitte und auf unterschiedlichen Höhenniveaus (21) so vorspringen, dass die Querschenkel (12) in die Gestänge-Transportstellung (T) zum Schachteln aneinander vorbeiführbar sind.

2. Gestänge nach Anspruch 1, **dadurch gekennzeichnet, dass** bis auf den in der Gestänge-Arbeitsstellung (A) bezüglich des mittleren Gestängeteils (2) äußersten Abschnitt (10) jeder weiter innenliegende Abschnitt (4, 6, 8) einen Querschenkel (12) aufweist, vorzugsweise bei vier Abschnitten pro Seite die inneren drei Abschnitte.

3. Gestänge nach zumindest einem der vorstehenden Ansprüche, **dadurch gekennzeichnet, dass** der Querschenkel (12) am Abschnitt (4, 6, 8) als flächiger Fachwerkrahmen (R) ausgebildet ist, vorzugsweise mit zwei annähernd zum Abschnitt parallelen, beabstandeten und durchgehenden Außenprofilen (14, 17) und diese verbindenden Diagonal- und/oder Querstreben (16).

4. Gestänge nach Anspruch 3, **dadurch gekennzeichnet, dass** die Außenprofile (14, 17), U-Profile oder L-Profile oder anders geartete Profile sind, und vorzugsweise die Diagonal- und/oder Querstreben (16) gelochte Profile sind.

5. Gestänge nach zumindest einem der vorstehenden Ansprüche 3 oder 4, **dadurch gekennzeichnet, dass** im Fachwerkrahmen (R) der Abstand zwischen den Außenprofilen (14, 17) in der Gestänge-Arbeitsstellung (A) in Richtung nach außen graduell abnimmt, vorzugsweise, zumindest über einen Teil der Abschnittslänge.

6. Gestänge nach zumindest einem der vorstehenden Ansprüche 3-5, **dadurch gekennzeichnet, dass** die Unterseiten der Abschnitte (4-10) im ausgeklappten Zustand auf gleichem Höhenniveau (20) liegen, dass die Oberseiten der Abschnitte (4-10) auf stufenweise abnehmenden Höhenniveaus (21) liegen, und dass die die Querschenkel (12) bildenden Fachwerkrahmen (R) auf den Oberseiten der Abschnitte (4, 6, 8) angebracht sind.

7. Gestänge nach zumindest einem der vorstehenden Ansprüche 3-6 **dadurch gekennzeichnet, dass** ein Außenprofil (14) des Fachwerkrahmens (R) auf der Oberseite des Abschnitts (4, 6, 8) im Wesentlichen entlang der Oberseitenkante verläuft, die der Hochseite des Abschnitts abgewandt ist, gegenüber der der den Querschenkel (12) bildende Fachwerkrahmen (R) vorspringt.

8. Gestänge nach zumindest einem der vorstehenden Ansprüche 3-7 **dadurch gekennzeichnet, dass** am innersten, über das Gelenk (3) an den mittleren Gestängeteil (2) angeschlossenen Abschnitt (4) ein Endabschnitt (18) des anderen Außenprofils (17) des Fachwerkrahmens (R) in Richtung zum Gelenk (3) schräg abgeknickt ist.

9. Gestänge nach zumindest einem der vorstehenden Ansprüche, **dadurch gekennzeichnet, dass** der Querschenkel (12) jedes in Bezug auf den mittleren Gestängeteil (2) äußeren Abschnitts (4, 6, 8) weniger weit vorspringt als der Querschenkel (12) des nächstinneren Abschnitts (6, 4), vorzugsweise derart, dass in der Gestänge-Transportstellung (T) die Querschenkel (12) innerhalb einer durch sämtliche zusammengefalteten Abschnitte (4-10) definierten Transportbreite (X) liegen.

10. Gestänge nach zumindest einem der vorstehenden Ansprüche, **dadurch gekennzeichnet, dass** die Querschenkel (12) auf den Abschnitten (4, 6, 8) mehrfach verschraubt, vernietet, verschweißt, verklebt oder sind.

11. Gestänge nach einem der vorhergehenden Ansprüche, **dadurch gekennzeichnet, dass** im Bereich des Gelenks (5, 7) am Querschenkel (12) eines Abschnitts (4, 6) eine durch das Stellelement (13) aus einer Stauposition in eine Aussteifposition ausschwenkbare und am Querschenkel (12) des anderen Abschnitts (6, 8) zumindest abstützbare Schwenkstrebe (15) vorgesehen ist.

## Claims

1. Boom (G) of a piece of agricultural equipment (L), in particular a spreader boom of a crop sprayer (F), having a plurality of portions (4, 6, 8, 9), which are connected for pivoting action via joints (3, 5, 7, 9) more or less perpendicular to the ground, are each designed in a manner of upright lattice beams, are fitted on either side of a central boom part (2) and can be adjusted by means of actuating elements (13) between an outwardly folded-out boom-operating position (A), in which the portions are aligned approximately transversely to the operating direction (11) and more or less parallel to the ground, and a zigzag-folded boom-transporting position (T), which is oriented approximately in the operating direction (11) and in which portions are placed parallel one on the other, **characterized in that**, starting from the central boom part (2), at least two portions (4, 6, 8), which follow one after the other via the respective joint (5, 7), are stiffened in each case by at least one transverse limb (12), which is approximately parallel to the ground and projects in relation to a top boom side of the portion, and **in that**, in the boom-operating position (A), the transverse limbs (12) of the two portions (4, 6; 6, 8) project, as seen with respect to the joint (5; 7) in relation to the mutually remote top sides of the two portions and at different height levels (21) such that the transverse limbs (12) can be guided past one another, into the boom-transporting position (T), for nesting purposes.

2. Boom according to Claim 1, **characterized in that**, with the exception of the outermost portion (10) in the operating position (A), as seen with respect to the central boom part (2), each portion (4, 6, 8) which is located further to the inside has a transverse limb (12), preferably, in the case of four portions per side, the inner three portions.

3. Boom according to at least one of the preceding two claims, **characterized in that** the transverse limb (12) on the portion (4, 6, 8) is designed in the form of a sheet-like truss (R), preferably with two spaced-apart and continuous outer profiles (14, 17), which are more or less parallel to the portion, and diagonal and/or transverse struts (16), which connect said outer profiles.

4. Boom according to Claim 3, **characterized in that** the outer profiles (14, 17) are U-shaped profiles or L-shaped profiles or other types of profiles, and preferably the diagonal and/or transverse struts (16) are perforated profiles.

5. Boom according to at least one of preceding Claims 3 or 4, **characterized in that**, in the truss (R), the distance between the outer profiles (14, 17) in the boom-operating position (A) decreases gradually in the outward direction, preferably at least over part of the portion length.

6. Boom according to at least one of preceding Claims 3-5, **characterized in that** the undersides of the portions (4-10) are located at the same height level (20) in the swung-out state, **in that** the upper sides of the portions (4-10) are located at height levels (21) which decrease in a stepwise manner, and **in that** the trusses (R), which form the transverse limbs (12), are fitted on the upper sides of the portions (4, 6, 8).

7. Boom according to at least one of preceding Claims 3-6, **characterized in that** one outer profile (14) of the truss (R) runs on the upper side of the portion (4, 6, 8), essentially along that edge of the upper side which is directed away from the top portion side in relation to which the truss (R), which forms the transverse limb (12), projects.

8. Boom according to at least one of preceding Claims 3-7, **characterized in that** an end portion (18) of the other outer profile (17) of the truss (R) is angled obliquely in the direction of the joint (3) on the innermost portion (4), which is connected to the central boom part (2) via the joint (3).

9. Boom according to at least one of the preceding claims, **characterized in that** the transverse limb (12) of each outer portion (4, 6, 8), as seen with respect to the central boom part (2), projects less far than the transverse limb (12) of the next portion (6, 4) to the inside, preferably such that, in the boom-transporting position (T), the transverse limbs (12) are located within a transporting width (X), which is defined by all the folded-together portions (4-10).

10. Boom according to at least one of the preceding claims, **characterized in that** the transverse limbs (12) are screwed, riveted, welded, or adhesively bonded a number of times on the portions (4, 6, 8).

11. Boom according to one of the preceding claims, **characterized in that** in the region of the joint (5, 7), provided on the transverse limb (12) of one portion (4, 6) there is a pivoting strut (15), which can be pivoted out of a stowage position into a stiffening position by the actuating element (13) and can be at least supported on the transverse limb (12) of the other portion (6, 8).

## Revendications

1. Rampe (G) d'un engin agricole (L), en particulier rampe de distribution d'un pulvérisateur agricole (F), avec plusieurs sections (4, 6, 8, 9) assemblées de façon pivotante par des articulations (3, 5, 7, 9) sensiblement perpendiculaires au sol, respectivement formées à la manière de poutres en treillis posées sur chant, montées sur les deux côtés d'une partie de rampe centrale (2), qui sont déplaçables au moyen d'éléments de commande (B) entre une position de travail (A) de la rampe déployée vers l'extérieur, dans laquelle les sections sont alignées sensiblement transversalement à la direction de travail (11) et sont approximativement parallèles au sol, et une position de transport (T) de la rampe repliée en zigzag orientée sensiblement dans la direction de travail (11) avec des sections placées parallèlement les unes aux autres, **caractérisée en ce qu'**à partir de la partie de rampe centrale (2) au moins deux sections (4, 6, 8) se succédant par l'intermédiaire de l'articulation respective (5, 7) sont raidies respectivement par au moins une branche transversale (12) sensiblement parallèle au sol, qui est saillante par rapport à un côté vertical de rampe de la section, et **en ce que** dans la position de travail (A) de la rampe les branches transversales (12) des deux sections (4, 6; 6, 8) sont saillantes par rapport à l'articulation (5; 7) par rapport aux côtés verticaux détournés l'un de l'autre des deux sections et à des niveaux (21) de hauteur différents, de telle manière que les branches transversales (12) puissent être guidées le long l'une de l'autre pour d'emboîter dans la direction de transport (T) de la rampe.

2. Rampe selon la revendication 1, **caractérisée en ce que** chaque autre section intérieure (4, 6, 8) jusqu'à la section le plus extérieure (10) par rapport à la partie de rampe centrale (2) dans la position de travail (A) de la rampe présente une branche transversale (12), de préférence dans le cas de quatre sections par côté les trois sections intérieures.

3. Rampe selon au moins une des revendications précédentes, **caractérisée en ce que** la branche transversale (12) sur la section (4, 6, 8) est réalisée sous la forme d'un cadre en treillis plat (R), de préférence avec deux profilés extérieurs (14, 17) sensiblement parallèles à la section, espacés et continus et des entretoises diagonales et/ou transversales (16) qui les relient.

4. Rampe selon la revendication 3, **caractérisée en ce que** les profilés extérieurs (14, 17) sont des profilés en U ou des profilés en L ou des profilés d'une autre nature, et de préférence les entretoises diagonales et/ou transversales (16) sont des profilés perforés.

5. Rampe selon au moins une des revendications précédentes 3 ou 4, **caractérisée en ce que** dans le cadre en treillis (R) la distance entre les profilés extérieurs (14, 17) dans la position de travail (A) de la rampe diminue graduellement en direction de l'extérieur, de préférence au moins sur une partie de la longueur de la section.

6. Rampe selon au moins une des revendications précédentes 3 à 5, **caractérisée en ce que** les côtés inférieurs des sections (4-10) dans l'état déployé se trouvent au même niveau de hauteur (20), **en ce que** les côtés supérieurs des sections (4-10) se trouvent à des niveaux de hauteur diminuant par paliers, et **en ce que** les cadres en treillis (R) formant les branches transversales (12) sont montés sur les côtés supérieurs des sections (4, 6, 8) .

7. Rampe selon au moins une des revendications précédentes 3 à 6, **caractérisée en ce qu'**un profilé extérieur (14) du cadre en treillis (R) s'étend sur le côté supérieur de la section (4, 6, 8) essentiellement le long du bord du côté supérieur, qui est détourné du côté vertical de la section, par rapport auquel le cadre en treillis (R) formant la branche transversale (12) est en saillie.

8. Rampe selon au moins une des revendications précédentes 3 à 7, **caractérisée en ce que** sur la section le plus intérieure (4), reliée à la partie de rampe centrale (2) par l'articulation (3), une section d'extrémité (18) de l'autre profilé extérieur (17) du cadre en treillis (R) est coudée en oblique en direction de l'articulation (3).

9. Rampe selon au moins une des revendications précédentes, **caractérisée en ce que** la branche transversale (12) de chaque section extérieure (4, 6, 8) par rapport à la partie de rampe centrale (2) est moins saillante que la branche transversale (12) de la section intérieure suivante (6, 4), de préférence de telle manière que dans la position de transport (T) de la rampe les branches transversales (12) soient situées à l'intérieur d'une largeur de transport (X) définie par l'ensemble des sections repliées (4-10).

10. Rampe selon au moins une des revendications précédentes, **caractérisée en ce que** les branches transversales (12) sont plusieurs fois vissées, rivées, soudées ou collées sur les sections (4, 6, 8).

11. Rampe selon au moins une des revendications précédentes, **caractérisée en ce qu'**il est prévu dans la région de l'articulation (5, 7) sur la branche transversale (12) d'une section (4, 6) une entretoise pivotante (15) pouvant pivoter au moyen de l'élément de commande (13) d'une position de rangement à une position d'extension et pouvant s'appuyer sur la branche transversale (12) de l'autre section (6, 8).
